# NEUE EUROPÄISCHE PATENTSCHRIFT

(11) **EP 0 370 447 B2**
(45) Veröffentlichungstag und Bekanntmachung des Hinweises auf die Entscheidung über den Einspruch: **16.08.2001**
(45) Hinweis auf die Patenterteilung: 16.02.1994
(21) Anmeldenummer: 89121484.3
(22) Anmeldetag: 21.11.1989
(51) Int. Cl.: C08B 11/20, B02C 13/282, B02C 17/00

(54) **Verfahren zur produktschonenden Mahlung und gleichzeitigen Trocknung von feuchten Celluloseethern**
Method for the product-reserving milling and simultaneous drying of moist cellulose ethers
Procédé qui préserve le produit durant le broyage et le séchage simultanés d'éthers humides de cellulose

(30) Priorität: 25.11.1988 DE 3839831
(43) Veröffentlichungstag der Anmeldung: 30.05.1990
(73) Patentinhaber: Clariant GmbH, 65929 Frankfurt am Main (DE)
(72) Erfinder: Dönges, Reinhard, Dr., D-6232 Bad Soden am Taunus (DE); Sponheimer, Manfred DI, D-6200 Wiesbaden (DE); Welt, Günther, Dr., D - 6501 Gau-Bischofsheim (DE); Ziegelmayer, Manfred DI, D-6094 Bischofsheim (DE)

(56) Entgegenhaltungen:
- DE-A- 1 454 824
- DE-A- 3 032 778
- DE-A- 3 300 197
- FR-A- 2 288 553
- US-A- 2 575 380
- US-A- 4 415 124
- Firmenschrift "Pallmann - Information" - Siebkorbmühlen Baureihe PPS, Ausgabedatum 6/88
- Chemie-Technik 6/88, "Siebkorbmühlen für schwierige Produkte"

## Beschreibung

Die vorliegende Erfindung betrifft ein Verfahren zur produktschonenden Mahlung und gleichzeitigen Trocknung von feuchten Celluloseethern.

Nach der Reaktion und gegebenenfalls nach der Reinigung von bei der Reaktion entstandenen Nebenprodukten liegen die Celluloseether in bröckeliger, stückiger, faseriger, wolliger oder wattiger Struktur vor. In dieser Form sind sie für ihren Einsatz, z. B. als in organischen und/oder wäßrigen Medien lösliche Produkte, nicht geeignet.

Auch ist es notwendig, für die unterschiedlichen Einsatzgebiete bestimmte Korngrößenverteilungen, Trocknungsgrade und Viskositätsgrade der Ether einzustellen. So werden z. B. Ether in fein- oder feinstteiliger Form benötigt, um schnell klumpfenfreie Lösungen, z. B. in Wasser, herstellen zu können. Für schnell quellfähige Ether, die z. B. in der Bohröl- oder Bauindustrie benötigt werden, ist die Viskositäts- und/oder die Korngrößenverteilung der Produkte von mit ausschlaggebender Bedeutung für ihre Wirksamkeit.

Grundsätzlich müssen also nahezu alle Celluloseether gemahlen und getrocknet werden, um sie einsatzfähig zu machen.

So ist aus der DE-C 952 264 ein dreistufiges Verfahren zur Überführung feuchter, faseriger Methylcellulosen in Pulver von hoher Lösegeschwindigkeit bekannt. Hier wird das 50 bis 70 Gew.-% Wasser enthaltende Produkt zuerst zu einer plastischen Masse homogenisiert und auf 10 bis 20 °C gekühlt, wobei man sich einer gekühlten Schneckenpresse bedient; anschließend wird mit einer Hammerkorbmühle gemahlen und in einem Umlufttrockner getrocknet.

Die DE-C 24 10 789 (= US-A 4 044 198) beschreibt ein Verfahren zur Herstellung von Cellulosederivaten, vorzugsweise Celluloseethern, mit hohem Feinanteil. Hier werden die feuchten Cellulosederivate mittels flüssigem Stickstoff versprödet und dann einer Mahlung unterworfen.

Die DE-B 24 58 998 (= US-A 4 076 935) und die Zusatzanmeldung hierzu DE-B 25 56 821 betreffen Verfahren zur Feinmahlung von Cellulose oder deren Derivate, insbesondere Ether, wobei man die Mahlung des Produkts mit einem Wassergehalt von 5 bis 14 Gew.-% so lange vornimmt bis die Teilchengröße höchstens 100 um und die Restfeuchte höchstens 2 bis 10 Gewichtsprozent beträgt. Hierzu werden Schwingmühlen eingesetzt.

In der EP-A 0 049 815 (= US-A 4 415 124) wird ein zweistufiges Verfahren zur Herstellung von Mikropulvern aus Celluloseethern oder Cellulose beschrieben, wobei man die Produkte, die eine feinfaserige oder wollige Struktur aufweisen, zuerst in eine versprödete, verfestigte Form überführt und das so vorbehandelte Material einer Mahlung unterwirft, bis eine Korngrößenverteilung von mindestens 90 % unter 125 µm erreicht wird. In der Versprödungsstufe werden Schwing- oder Kugelmühlen, vorzugsweise in gekühlter Ausführung, oder Pelletpressen und in der Mahlstufe Strahl-, Stift- oder Pralltellermühlen eingesetzt.

DE-A-14 54 824 beschreibt ein Verfahren zur Herstellung von Granulaten oder Pulvern aus faserigen, trockenen Celluloseethern durch Friktionierung zwischen zwei Walzen unterschiedlicher Drehzahl und nachfolgender Mahlung.

DE-A-30 32 778 nennt ein zweistufiges Verfahren zur kontinuierlichen Homogenisierung von feuchten Celluloseethern, indem man den feuchten Celluloseether einer Schneid-, Prall- und Scherwirkung, erzeugt durch umlaufende Drehkörper mit verschiedenen Mantelprofilen, unterwirft, gegebenenfalls gleichzeitiger Pelletisierung der zerkleinerten Celluloseether unter Zugabe von Wasser und anschließender Trocknung der erhaltenen Pellets.

Die bekannten Verfahren nach dem Stand der Technik sind zum großen Teil mehrstufig mit Vortrocknung oder Vorversprödung bzw. -verdichtung oder bedingen einen hohen apparativen Aufbau, z. B. durch intensive Kühlung. Weiterhin ist bei allen Verfahren die chemische und/oder thermische Beanspruchung der Makromoleküle, besonders bei der Verarbeitung von hochviskosen, hochsubstituierten Produkten, immer noch so hoch, daß bei der Mahlung die Makromoleküle im Sinne einer Kettenverkleinerung abgebaut werden, was sich insbesondere durch den mehr oder minder hohen Viskositätsabbau gegenüber den eingesetzten Produkten bemerkbar macht. Außerdem verhornen die Oberflächen der behandelten Produkte durch die Vorversprödungs- bzw. Vortrocknungsschritte, was sich unerwünscht bezüglich der kundenseitig geforderten schnellen und vollständigen Löseeigenschaften bemerkbar macht.

Aufgabe der vorliegenden Erfindung ist es deshalb, ein einfaches Verfahren zu entwickeln, bei dem
- gezielte Mahlungsgrade eingestellt werden können,
- keine Verhornung der Produkte auftritt,
- nur eine geringe Restfeuchte nach der Mahlung verbleibt,
- das Schüttgewicht der Produkte erhöht wird und
- vor allem kein oder nur ein minimaler Viskositätsabbau gegenüber den Ausgangsprodukten erfolgt.

Gelöst wird die vorstehend genannte Aufgabe durch ein Verfahren zum gleichzeitigen Mahlen und Trocknen feuchter Celluloseether, wobei man
a) einen Celluloseether mit einer Anfangsfeuchte von 20 bis 70 Gew.-% in einen kreisförmigen Raum mittels eines Transportgases einbringt, und in diesem
b) unter Kreislaufführung den Celluloseether mit einer Anfangsfeuchte von 20 bis 70 Gew.-% mittels eines Schlägerrades schalgzerkleinert,
c) das Produkt gleichzeitig in Gegenlaufrichtung zum Schlägerrad mittels eines Siebkorbes reibzerkleinert, wobei
d) die Umfangsgeschwindigkeit des Schlägerrades 60 bis 80 m/s und die des Siebkorbes 25 bis 35 m/s beträgt, so daß sich eine Mahlenergie einstellt, die das Produkt auf eine vorgegebene Restfeuchte von 1 bis 10 Gew.-% trocknet,
e) das Mahlgut durch den in die Zerkleinerungsräume eingeleiteten Gasstrom weiterbefördert,
f) das Mahlgut vom Gasstrom trennt und gegebenenfalls
g) das Mahlgut einer selektiven Siebung unterwirft.

Die durch die gegenläufig arbeitende Zerkleinerung erzeugte Temperatur, die zum Trocknen des feuchten Ausgangsgutes dient, bzw. der Feuchtegehalt, der notwendig ist, um ein Übertrocknen des Gutes zu verhindern, wird bevorzugt durch Temperieren und/oder Befeuchten des Transportgases unterstützt bzw. gesteuert, wobei diese Temperierung und/oder Befeuchtung auf den gewünschten Restfeuchtegehalt des Endproduktes abgestimmt wird.

Unter Temperierung ist hierbei sowohl eine zusätzliche Beheizung als auch eine Vorkühlung des Transportgases zu verstehen.

Im Rahmen des erfindungsgemäßen Verfahrens ist auch vorgesehen, die Temperatur und den Feuchtigkeitsgehalt des Mahlgutes durch Temperieren innerhalb der Zerkleinerungsräume oder von außen her zu beeinflussen. Dies kann durch Beheizen oder Kühlen von einzelnen Aggregaten, z. B. der Wandung des die Zerkleinerungsräume umgebenden Gehäuses geschehen.

Innerhalb des Verfahrens ist vorzugsweise vorgesehen, daß man das über einen vorgegebenen Bereich hinausgehende Überkorn des gemahlenen Gutes absiebt und nach der Absiebung und gegebenenfalls nach Befeuchtung dem Aufgabegut zuschlägt. Dies kann chargenweise erfolgen, wird aber bevorzugt kontinuierlich durchgeführt. Die Schlagzerkleinerung wird vorzugsweise mittels eines in einem Gehäuse umlaufenden Schlägerrades, die Reibzerkleinerung mittels eines mit Reibsegmenten und gelochten Reibblechen versehenen gegenläufig umlaufenden Siebkorbs vorgenommen.

Im Rahmen des Verfahrens werden Celluloseether eingesetzt, die eine Ausgangsfeuchte von 20 bis 70 Gew.-% aufweisen.

Die Schlag- und Reibzerkleinerung wird unter der gegebenenfalls zusätzlich eingesetzten Temperierung und/oder Befeuchtung derart eingestellt, daß das Endprodukt eine Restfeuchte von 1 bis 10 Gew.-% aufweist. Mit Hilfe des erfindungsgemäßen Verfahrens können grundsätzlich alle Celluloseether gemahlen und gleichzeitig in einer Stufe getrocknet werden. Besonders günstig wird das Verfahren bei Methylhydroxyalkylcellulosen, wie Methylhydroxyethyl- und Methylhydroxypropylcellusen, oder Mischethem, und dabei besonders bei solchen mit hohen Viskositäten von 50.000 bis über 100.000 mPas, gemessen in 1,9 % wäßriger Lösung angewendet.

Die Produkte, insbesondere die hochviskosen, zeigen nach Mahlung und Trocknung gegenüber den Ausgangsprodukten keinen bzw. nur äußerst geringen Viskositätsabbau im Gegensatz zu solchen, die nach dem Stand der Technik gemahlen und getrocknet wurden. Hierzu wird auf die später folgenden Beispiele und Tabellen verwiesen.

Grundsätzlich genügt es, den erfindungsgemäßen Mahl- und Trockenvorgang nur einmal durchzuführen. Um jedoch eine extrem feine Körnung zu erzielen, kann es manchmal zweckmäßig sein, den Mahl- und Trocknungsvorgang mehrfach bevorzugt in kontinuierlicher Fahrweise durchzuführen. In vielen Fällen genügt normalerweise ein zweiter Durchgang, um Produkte mit Feinstkorn zu erzielen.

Eine Vorrichtung zur Durchführung des Verfahrens besteht aus
a) einem Gehäuse 1,
b) einem darin konzentrisch angeordneten, mit mehreren Schlagleisten 3 versehenen Schlägerrad 2,
c) einem zum Schlägerrad 2 konzentrisch angeordneten Siebkorb 4, der abschnittsweise hintereinander und am Umfang angeordnete Sägezahnsegmente 5 und mit Öffnungen versehene Reibbleche 6 aufweist, wobei der Abstand zwischen Schlägerrad (Schlagleistenkante) und Siebkorb (Zahnoberkante Reibblech bzw. Zahn des Sägezahnsegments) 1 bis 10 mm beträgt,
d) bekannte Einrichtungen für den gegenläufigen Antrieb der Wellen 7, 8, mit denen das Schlägerrad 2 bzw. der Siebkorb 4 verbunden sind, und
e) einer in dem Gehäuse angebrachten Eingangsöffnung 9 zur Eingabe des zu mahlenden und trocknenden Gutes und zur Einführung des Transportgases sowie
f) einer in dem Gehäuse angebrachten Austragsöffnung 10 für das gemahlene und getrocknete Gut sowie für das Transportgas.

Durch die Schlagleisten des Schlägerrades wird das eingegebene Gut schlagzerkleinert und durch den mit Reibsegmenten und gelochten Reibblechen (im folgenden "Reibbleche" genannt) versehenen, gegenläufig zum Schlägerrad angetriebenen Siebkorb reibzerkleinert.

Die Sägezahnsegmente bestehen aus mit Zähnen versehenen Abschnitten im Siebkorb, wobei die Sägezahnlänge in Kombination mit den Reibblechen je nach gewünschter Reibzerkleinerung in verschiedenen Längen bzw. Dichten gewählt werden kann. Die Zähne haben bevorzugt eine Länge von 1 bis 10 mm.

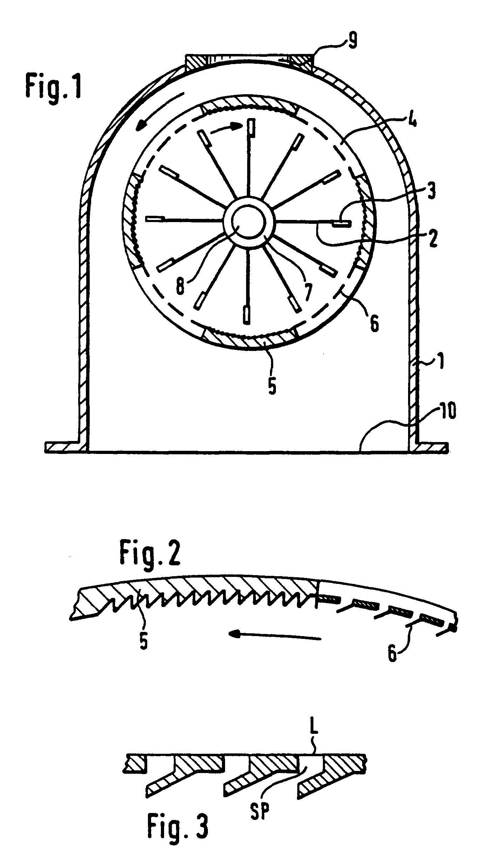

Die Reibbleche sind im Siebkorb abwechselnd mit den Reibesegmenten angeordnet. Reibbleche sind Bleche, in denen durch schräge Anstanzung Öffnungen, bevorzugt in Trapezform, erzeugt sind, die einseitig Zahnüberstände aufweisen (Fig. 3). Sie haben bevorzugt eine Öffnung von 0,12 bis 0,8 mm in Längsrichtung und eine Spaltweite von ebenfalls 0,12 bis 0,8 mm,insbesondere von 0,15 bis 0,5 mm.

Der Siebkorb weist im allgemeinen Durchmesser von 500 bis 1.500 mm in Breiten von 100 bis 700 mm auf.

Die Umfangsgeschwindigkeiten des Schlägerrades und des gegenläufig angetriebenen Siebkorbs werden so eingestellt, daß sie 60 bis 80 m/s bzw. 25 bis 35 m/s betragen. Diese Einstellung wird mittels des jeweiligen an die Antriebswellen angeschlossenen Antriebsaggregats vorgenommen.

Grundsätzlich kann das zu mahlende und zu trocknende Gut so in die Vorrichtung eingegeben werden, wie es in stückiger, wolliger, flockiger, körniger oder fladenförmiger Form mit bestimmtem Feuchtigkeitsgehalt anfällt.

Die durch die Abstimmung der Umlaufgeschwindigkeiten von Schlägerrad und Siebkorb sowie die Wahl der Ausgestaltung der Reibsegmente und Reibbleche sowie den Abstand des Schlägerrades zum Siebkorb erzeugte Temperatur in der Vorrichtung im Zusammenwirken mit der Temperatur des Transportgases reicht normalerweise aus, um einen vorgegebenen Mahlgrad und eine bestimmte Restfeuchte zu erzielen. Der Abstand zwischen Schlägerrad (Schlagleistenkante) und Siebkorb (Zahnoberkante Reibblech bzw. Zahn des Sägezahnsegments) beträgt 1 bis 10 mm, vorzugsweise 2 bis 4 mm.

Zur gezielten Steuerung ist es in manchen Fällen zweckmäßig, bekannte Einrichtungen vorzusehen, mit denen das Transportgas temperiert und/oder befeuchtet werden kann. Unter Temperierung ist - je nach gewünschtem Zweck - sowohl eine Beheizung als auch eine Kühlung zu verstehen. Zum Zwecke der Temperatureinstellung für die Behandlung des Gutes kann auch vorgesehen werden, das Gehäuse und/oder das Schlägerrad und/oder den Siebkorb zu temperieren.

Für das Gehäuse kommt sowohl eine Durchleitung der Flüssigkeiten oder Gase in temperierter Form durch in das Gehäuse eingelassene Kanäle als auch eine elektrische Beheizung in Frage. Für das Schlägerrad und/oder den Siebkorb können z. B. Beheizungen über Schleifkontakte vorgesehen sein.

Zweckmäßigerweise werden der Mahl- und Trocknungsvorrichtung Einrichtungen zum Sieben nachgeschaltet, um bestimmte Korngrößen absieben zu können.

Das normalerweise in relativ geringen Mengen anfallende Überkom, das über eine vorgegebene Korngröße bzw. Korngrößenverteilung hinausgeht, wird vorzugsweise mittels an sich bekannter Einrichtungen zum Aufgabegut zurückgeführt. Da dieses Gut normalerweise bereits auf einen niedrigen Gehalt an Restfeuchte getrocknet ist, wird vor der Rückführung in den Kreislauf vorzugsweise eine erneute Befeuchtung vorgenommen, um eine Verhornung bzw. einen Viskositätsabbau dieses Produktanteils zu verhindern.

Das erfindungsgemäße Verfahren hat sich besonders bei der Mahlung und Trocknung von vorzugsweise hochviskosen Celluloseethern bewährt. Besonders gut können damit hochviskose Methylhydroxyalkylcellulosen, wie z. B. Methylhydroxyethyl- und Methylhydroxypropylcellulose, Mischether, Carboxymethylcellulose und Hydroxyethylcellulose bearbeitet werden. Grundsätzlich ist das erfindungegemäße Verfahren nicht auf hochviskose Produkte beschränkt und kann auch bei mittel- und niedrigviskosen Ethem, bei denen es auf gute Mahlung und Trocknung ankommt, angewendet werden, ohne daß ein Viskositätsabbau erfolgt.

In den folgenden, tabellarisch zusammengestellten Beispielen werden die erfindungsgemäße Mahlung und Trocknung von Celluloseethern in einstufiger Fahrweise beschrieben, ohne daß jedoch eine Einschränkung auf die gezeigten Ausführungsformen bestehen soll.

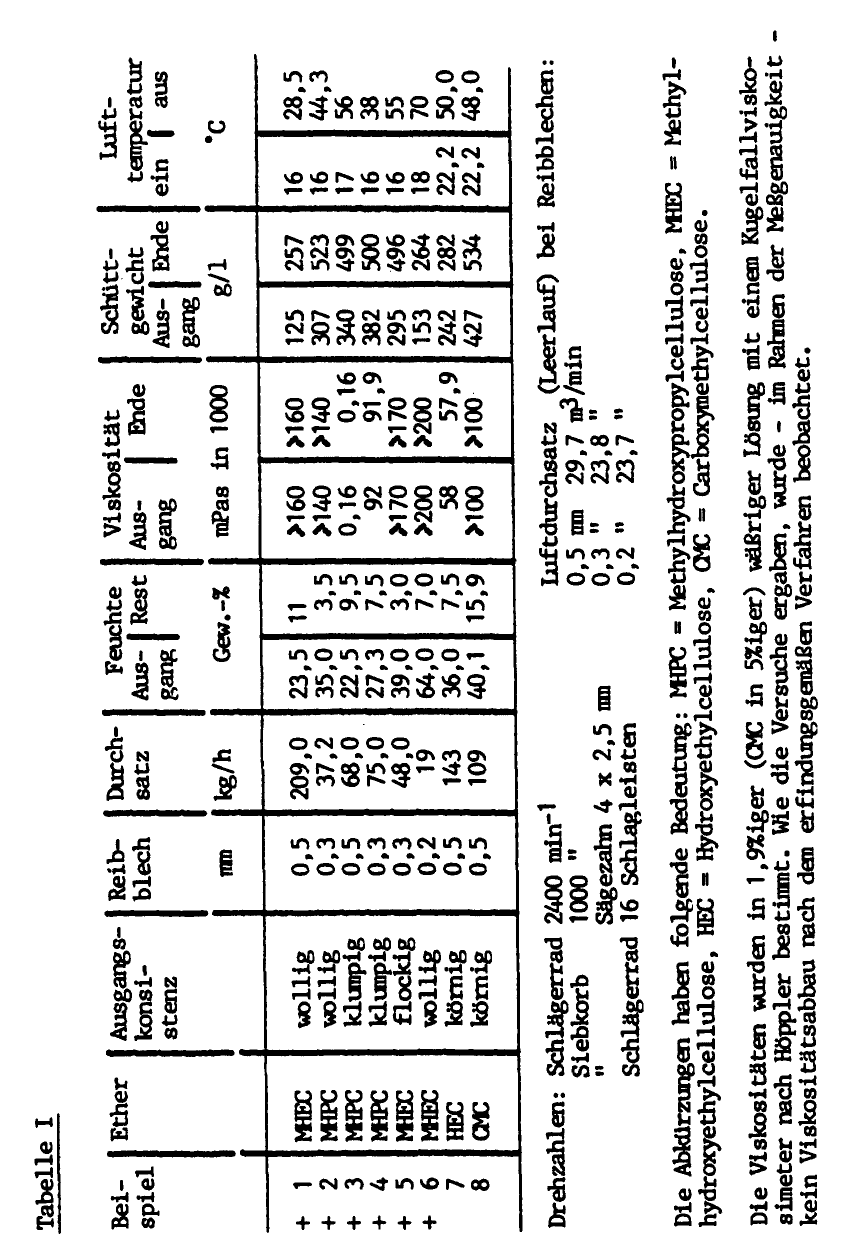

Die mit + bezeichneten Versuche wurden auf einer Schwingmühle mit Kreislaufführung nach dem Stand der Technik wiederholt. Hierbei wurden folgende Ergebnisse erhalten:

**Tabelle II**

| Versuch | Ausgangsmaterial | Viskosität | | Schüttgew. | | Restfeuchte | Durchsatz |
|---|---|---|---|---|---|---|---|
| | | Ausgang | Ende | Ausgang | Ende | | |
| | | mPas in 1000 | | g/l | | Gew.-% | kg/h |
| A | wie 1 | >150 | 120 | 125 | 214 | 1,5 | 4,6 |
| B | wie 2 | >140 | 37 | 307 | 379 | 3,3 | 2,8 |
| C | wie 3 | 0,16 | 0,15 | 340 | 362 | 1,8 | 1,0 |
| D | wie 4 | 92 | 40 | 382 | 406 | 1,0 | 2,0 |
| E | wie 5 | >170 | 96,4 | 295 | 332 | 3,5 | 4,0 |

Der Versuch B wurde wiederholt, mit dem Unterschied, daß keine Schwingmühlenmahlung, sondern eine Kaltmahlung nach dem Stand der Technik durchgeführt wurde. Hierbei wurde die eingesetzte MHPC aus Versuch 2 mit einer Ausgangsviskosität von >140 000 mPas trotz Kühlung des Ausgangsgutes mit fl. N₂ auf - 170 °C nach der Mahlung nach dem Stand der Technik auf eine Endviskosität von 106 000 mPas abgebaut. Der Durchsatz betrug dabei 7 kg/h.

Die Versuche ergeben somit eindeutig, daß mit Hilfe des erfindungsgemäßen Verfahrens auch hochviskose Celluloseether, vor allem solche oberhalb 50 000 mPas, insbesondere oberhalb 100 000 mPas auf eine vorbestimmte Korngröße gemahlen und getrocknet werden können, ohne daß es zu einen unerwünschten Viskositätsabbau oder einer Verhornung kommt, wobei das Schüttgewicht ebenfalls in erwünschter Weise angehoben wird. Auch bei mehrmaliger Mahlung und Trocknung zur Herstellung eines besonders feinkörnigen Produkts zeigten sämtliche Celluloseetherproben keinen Viskositätsabbau.

Mit den folgenden Figuren werden die Vorrichtung bzw. Möglichkeiten der Verfahrensführung näher erläutert, ohne daß auch hier eine Einschränkung auf die gezeigten Ausführungsformen bestehen soll.

Figur 1 zeigt in schematischer Darstellung in Seitenansicht im Schnitt eine Vorrichtung in grundsätzlicher Darstellung zur Schlag-Reibzerkleinerung. Im Gehäuse 1 ist ein durch eine Welle 8 durch nicht dargestellte Einrichtungen angetriebenes Schlägerrad 2 angeordnet, wobei an den Enden der Schlagarme Schlagleisten 3 vorhanden sind. Konzentrisch zum Schlägerrad 2 ist der Siebkorb 4 angeordnet, der auf einer Welle 7 befestigt ist, die gegenläufig zum Schlägerrad den Siebkorb durch nicht dargestellte Einrichtungen antreibt. Im Siebkorb befinden sich abschnittsweise Sägezahnsegmente 5 und mit Öffnungen versehene Reibbleche 6. Das Gut und das Transportgas werden durch die Eingangsöffnung 9 in die Vorrichtung eingegeben und über die Öffnung 10 ausgetragen.

Figur 2 zeigt im Schnitt in Seitenansicht einen Teilabschnitt des Siebkorbs 4 mit Sägezahnsegment 5 und Reibblech 6.

In Figur 3 ist in Seitenansicht ein Teilabschnitt eines Reibblechs dargestellt. Dabei bedeuten L die Länge der Öffnung und SP die Spaltweite zwischen Unterkante Siebkorb und Oberkante Reibzahn.

Figur 4 zeigt in schematischer Darstellung eine Anlage zur einmaligen Mahlung und Trocknung.

Über die mit dem Motor 12 angetriebene Dosiervorrichtung 11 wird das Gut in die Vorrichtung SR, wie sie in Figur 1 dargestellt ist, eingetragen und dort gemahlen und getrocknet. Die Motoren 13 und 14 treiben die Wellen 7 und 8 gegenläufig an. Das Gut wird in dem Behälter 16 gesammelt. Die Filter 15 dienen der Reinigung des entweichenden Gasstroms.

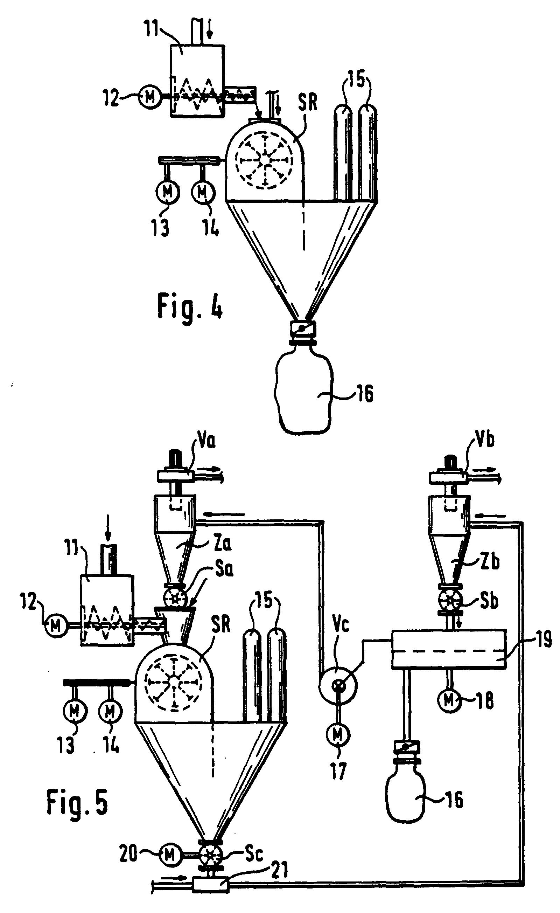

In Figur 5 ist eine Anlage mit Rückführung schematisch dargestellt. Hierin bedeuten zusätzlich zu den bereits beschriebenen Teilen:

| | |
|---|---|
| Va - Vc | Ventilatoren |
| 17 | Motor für Ventilator Vc |
| Za und Zb | Zyklonabscheider |
| 18 | Motor für Sieb 19 |
| 19 | Sieb |
| Sa - Sc | Zellradschleusen |
| 20 | Motor für Zellradschleuse Sc |
| 21 | Pneumatische Förderanlage |

## Patentansprüche

1. Verfahren zum gleichzeitigen Mahlen und Trocknen feuchter Celluloseether, wobei man
a) einen Celluloseether mit einer Anfangsfeuchte von 20 bis 70 Gew.-% in einen kreisförmigen Raum mittels eines Transportgases einbringt, und in diesem
b) unter Kreislaufführung den Celluloseether mit einer Anfangsfeuchte von 20 bis 70 Gew.-% mittels eines Schlägerrades schlagzerkleinert,
c) das Produkt gleichzeitig in Gegenlaufrichtung zum Schlägerrad mittels eines Siebkorbes reibzerkleinert, wobei
d) die Umfangsgeschwindigkeit des Schlägerrades 60 bis 80 m/s und die des Siebkorbs 25 bis 35 m/s beträgt, so daß sich eine Mahlenergie einstellt, die das Endprodukt auf eine vorgegebene Restfeuchte von 1 bis 10 Gew.-% trocknet,
e) das Mahlgut durch den in die Zerkleinerungsräume eingeleiteten Gasstrom weiterbefördert,
f) das Mahlgut vom Gasstrom trennt und gegebenenfalls
g) das Mahlgut einer selektiven Siebung unterwirft.

2. Verfahren nach einem der Anspruch 1, dadurch gekennzeichnet, daß man die durch die gegenläufige Zerkleinerung erzeugte Temperatur und/oder den Feuchtigkeitsgehalt für das Produkt 25 durch Temperieren und/oder Befeuchten des Transportgases zur Einstellung des gewünschten Trocknungsgrades gelangt.

3. Verfahren nach einem der Anspruch 1 oder 2, dadurch gekennzeichnet, daß man die durch die gegenläufige Zerkleinerung und/oder Temperierung des Transportgases erzeugte Temperatur durch 30 zusätzliche Beheizung oder Kühlung der Zerkleinerungsräume oder Teilen davon steuert.

4. Verfahren nach einem der Ansprüche 1 bis 3, dadurch gekennzeichnet, daß man das über einen 4. vorgegebenen Bereich hinausgehende Überkorn des gemahlenen Gutes absiebt und nach der Absiebung und gegebenenfalls nach Befeuchtung dem Aufgabegut zurückführt.

5. Verfahren nach einem der Ansprüche 1 bis 4, dadurch gekennzeichnet, daß man die Schlagzerkleinerung mittels eines in einem Gehäuse umlaufenden Schlägerrades und die Reibzerkleinerung mittels eines mit Reibsegmenten versehenen gegenläufig umlaufenden Siebkorbs vornimmt.

## Claims

1. A process for simultaneous grinding and drying of moist cellulose ethers, wherein
a) a cellulose ether having an initial moisture content of 20 to 70% by weight is introduced by means of a transport gas into a circular space, and in this space
b) the cellulose ether having an initial moisture content of 20 to 70% by weight is impact-comminuted by means of a beater wheel while being circulated,
c) the product is simultaneously friction-comminuted in the direction opposite to that of the beater-wheel by means of a screen basket,
d) the peripheral speed of the beater wheel being 60 to 80 m/second and that of the screen basket being 25 to 35 m/second, such that the resulting grinding energy dries the end product to a predetermined residual moisture content of 1 to 10% by weight,
e) the ground material is conveyed onwards by the gas stream introduced into the comminution spaces,
f) the ground material is separated from the gas stream and, if desired,
g) the ground material is subjected to selective screening.

2. The process as claimed in claim 1, wherein the temperature generated by the comminution in opposite directions and/or the moisture content of the product is reached by temperature adjustment and/or moistening of the transport gas for setting the desired degree of drying.

3. The process as claimed in either of claims 1 and 2, wherein the temperature generated by the comminution in opposite directions and/or by the temperature adjustment of the transport gas is controlled by additional heating or cooling of the comminution spaces or parts thereof.

4. The process as claimed in any of claims 1 to 3, wherein the oversize of the ground material beyond a predetermined range is screened off and, after the screening and, if appropriate, moistening, is returned to the charge material.

5. The process as claimed in any of claims 1 to 4, wherein the impact comminution is effected by means of a beater wheel rotating in a housing, and the friction comminution is effected by means of a screen basket provided with friction segments and rotating in the opposite direction.

## Revendications

1. Procédé pour broyer et sécher simultanément des éthers humides de cellulose, selon lequel
a) on introduit un éther de cellulose possédant une humidité initiale de 20 à 70 % en poids dans une chambre circulaire au moyen d'un gaz d'entraînement, et dans celui-ci
b) on fragmente au moyen d'une roue de battage, par application de chocs, l'éther de cellulose possédant une humidité initiale de 20 à 70 % en poids, avec un recyclage,
c) on fragmente simultanément par friction le produit dans un sens de circulation inverse de celui de la roue de battage, au moyen d'un panier de tamisage,
d) la vitesse circonférentielle de la roue de battage étant de 60 à 80 m/s et celle du panier de tamisage de 25 à 35 m/s, de sorte qu'il apparaît une énergie de broyage qui sèche le produit final en lui conférant une humidité résiduelle prédéterminée de 1 à 10 % en poids,
e) on poursuit l'entraînement de la matière broyée au moyen du courant de gaz introduit dans les chambres de fragmentation,
f) on sépare la matière broyée du courant de gaz et éventuellement
g) on soumet la matière broyée à un tamisage sélectif.

2. Procédé selon la revendication 1, caractérisé en ce qu'on commande la température produite par la fragmentation en sens opposé, et/ou la teneur en humidité pour le produit par mise en température et/ou humidification du gaz de transport pour régler le degré de séchage désiré.

3. Procédé selon l'une des revendications 1 ou 2, caractérisé en ce qu'on commande la température, obtenue au moyen de la fragmentation en sens opposé et/ou de la mise en température du gaz d'entraînement, par chauffage ou refroidissement supplémentaire des chambres de fragmentation ou de parties de ces dernières.

4. Procédé selon l'une des revendications 1 à 3, caractérisé en ce qu'on sépare par tamisage le déclassé supérieur, qui dépasse une gamme prédéterminée, de la matière broyée et qu'on le renvoie à la matière à traiter après tamisage et éventuellement après humidification.

5. Procédé selon l'une des revendications 1 à 4, caractérisé en ce qu'on exécute la fragmentation par chocs à l'aide d'une roue de battage, qui tourne à l'intérieur d'un carter, et qu'on exécute la fragmentation par friction à l'aide d'un panier de tamisage qui comporte des segments de frottement et tourne en sens opposé.
